(19) Europäisches Patentamt
European Patent Office
Office européen des brevets

(11) Veröffentlichungsnummer : **0 050 226**
**B1**

(12) # EUROPÄISCHE PATENTSCHRIFT

(45) Veröffentlichungstag der Patentschrift : **04.07.84**

(51) Int. Cl.³ : **C 08 F 2/44**, C 08 F236/04

(21) Anmeldenummer : **81107484.8**

(22) Anmeldetag : **21.09.81**

(54) **Verfahren zur Herstellung von wäßrigen Dispersionen von Butadien-Co-polymerisaten durch Emulsionspolymerisation unter Zusatz von Harzen.**

(30) Priorität : **18.10.80 DE 3039426**

(43) Veröffentlichungstag der Anmeldung : **28.04.82 Patentblatt 82/17**

(45) Bekanntmachung des Hinweises auf die Patenterteilung : **04.07.84 Patentblatt 84/27**

(84) Benannte Vertragsstaaten : **DE FR GB IT NL SE**

(56) Entgegenhaltungen :
**FR-A- 2 155 658**
**GB-A- 318 296**
**GB-A- 634 503**
**US-A- 4 189 419**

(73) Patentinhaber : **BASF Aktiengesellschaft**
**Carl-Bosch-Strasse 38**
**D-6700 Ludwigshafen (DE)**

(72) Erfinder : **Luetje, Hans, Dr.**
**Benzheimer Ring 1**
**D-6710 Frankenthal (DE)**
Erfinder : **Druschke, Wolfgang, Dr.**
**Berliner Strasse 28**
**D-6711 Dirmstein (DE)**
Erfinder : **Zosel, Albrecht, Dr.**
**Ringweg 9**
**D-6940 Weinheim (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 050 226 B1

**Beschreibung**

Wäßrige Dispersionen von Emulsionscopolymerisaten des Butadiens mit Styrol und/oder Acrylnitril, die gegebenenfalls monoolefinisch ungesättigte Carbonsäuren, wie Acrylsäure oder Itaconsäure, einpolymerisiert enthalten, werden schon lange in großem Umfang hergestellt und unter anderem für die Herstellung von Haftklebe-Beschichtungen eingesetzt. Hierbei setzt man den Butadien-Copolymerisat-Dispersionen nach ihrer Herstellung durch Emulsionspolymerisation vor ihrem Einsatz für die Beschichtung Abietinsäure enthaltende, gegebenenfalls veresterte Naturharze in Form von deren Lösung in meist aromatischen Kohlenwasserstoffen, wie Toluol, zu. Die Menge an derartigen Zusätzen beträgt im allgemeinen 5 bis 30 Gew.-% Harz (fest), bezogen auf die Butadien-Copolymerisat-Dispersion (fest). Die Gemische werden dann im allgemeinen ohne Abtrennen der Lösungsmittel für Haftklebe-Beschichtungen eingesetzt. Dies führt jedoch oft zur Belästigung der mit der Beschichtung beschäftigten Personen durch Lösungsmitteldämpfe. Andererseits wäre das Abtrennen von verhältnismäßig großen Anteilen an Lösungsmitteln aus den Gemischen der Butadien-Copolymerisate und der Harze mit einem beträchtlichen Aufwand verbunden, da die Lösungsmittel, insbesondere Toluol, von den Butadien-Copolymerisaten hartnäckig festgehalten werden.

Als Abietinsäure enthaltende Naturharze kommen insbesondere die verschiedenen Kolophonium-Harze, ferner Wurzel-Harze, Balsam-Harze und Tall-Harze in Frage. Diese enthalten im allgemeinen 10 bis 40 % ihres Gewichts an Abietinsäure. Zur Herstellung von Haftklebebeschichtungen können sie auch in veresterter und/oder hydrierter Form eingesetzt werden. Derartige Ester sind im Handel erhältlich und leiten sich meist von 1 bis 5-wertigen Alkanolen, wie Methylalkohol, Äthylalkohol, n-Butylalkohol, Ethylenglykol, Di- und Triethylenglykol, Glycerin und Pentaerythrit ab, die meist 1 bis 6 C-Atome haben.

Im Hinblick auf den allgemeinen Trend wegen Belästigung durch Lösungsmitteldämpfe zu lösungsmittelfreien Systemen überzugehen und dem beträchtlichen Aufwand bei der Abtrennung von Lösungsmitteln, wie Toluol, von Gemischen aus Butadien-Copolymerisat-Dispersionen und Harzen der genannten Art besteht ein Bedürfnis nach der Herstellung von derartige Harze enthaltenden Butadien-Copolymerisat-Dispersionen ohne Mitverwendung von Lösungsmitteln.

Aus der FR-A 2 155 658 ist es zwar bekannt, wäßrigen Chloropren-Polymerisat-Dispersionen klebrigmachende Harze derart zuzusetzen, daß man den Chloropren-Polymerisat-Dispersionen nach der Polymerisation eine Lösung der klebrigmachenden harze in monomeren Chloropren zusetzt, wobei die Polychloropren-Dispersionen überschüssigen Emulgator enthalten. Man dampft dann die Monomeren wieder ab. Bei einer weiteren Ausführungsform dieses bekannten Verfahrens kann auch ein Teil der als Lösungsmittel für die klebrigmachenden Harze eingesetzten Monomeren nach dem Zusatz der Lösung zu der überschüssigen Emulgator enthaltenden Chloropren-Polymerisat-Dispersion polymerisiert und dann restliche Monomere abgedampft werden. Dieses Verfahren, dei dem weder Butadien noch Styrol mitverwendet werden, ist jedoch verhältnismäßig umständlich.

Es wurde nun gefunden, daß man wäßrige Dispersionen von Butadien-Copolymerisaten durch Polymerisation von

a) 40 bis 75 Gew.-% Butadien,
b) 60 bis 25 Gew.-% Styrol und/oder Acrylnitril und
c) 0 bis 5 Gew.-%, bezogen auf die Gesamtmonomeren α, β-monoolefinisch ungesättigten 3 bis 5 C-Atome enthaltenden Mono- und/oder Dicarbonsäuren

in wäßriger Emulsion in Gegenwart von üblichen Emulgatoren und Polymerisationsinitiatoren bei Temperaturen, die für die Emulsionscopolymerisation von Butadien üblich sind vorteilhaft herstellen kann, indem man in Gegenwart von 2 bis 15 Gew.-%, bezogen auf die Monomeren, Abietinsäure enthaltenden, gegebenenfallas veresterten und/oder hydrierten Naturharzen polymerisiert, die dem Polymerisationsgemisch als Lösung in den Monomeren zugegeben werden.

Man hat zwar schon versucht bei der Herstellung von Butadien-Styrol-Emulsionspolymerisationen Abietat-Seifen als Emulgatoren einzusetzen (vgl. F. A. Bovey, I. M. Kolthoff, A. I. Medalia, E. J. Meehan ; Emulsion Polymerization Interscience, New York (1955), Seite (341), dabei haben sich diese Seifen jedoch insofern als schädlich erwiesen, als sie die Emulsions-Cpoolymerisation hemmen. Es ist daher überraschend, daß bei dem vorliegenden Verfahren trotz des Zusatzes des Harze zu den Monomeren überhaupt in wäßriger Emulsion polymerisiert werden kann und daß dabei waßrige Dispersionen von besonders wenig vernetzen Butadien-Copolymerisaten erhalten werden, die verhältnismäßig große Mengen an Abietinsäure enthaltende, gegebenenfalls veresterte und/oder hydrierte Harze enthalten. Aus diesen, die Harze enthaltenden Butadien-Copolymerisat-Dispersionen können in an sich üblicher Weise Haftklebebeschichtungen auf den üblichen Substraten hergestellt werden, die einen besonders hohen Tack aufweisen. Dabei ist ihr Tack überraschenderweise etwa 3mal so groß wie von vergleichbaren Dispersionen ohne Harzzusatz, etwa doppelt so groß wie der Tack einer vergleichbaren Dispersion, der die gleiche Menge einer entsprechenden wäßrigen Harz-Dispersion zugesetzt ist und um mindestens 15 % größer als der Tack einer solchen vergleichbaren Dispersion der ein vergleichbares Harz in Form seiner Lösung in Toluol zugesetzt ist.

Das neue Verfahren kann in an sich üblicher Weise unter Verwendung der üblichen Emulgatoren und Polymerisationsinitiatoren durchgeführt werden. Geeignete Emulgatoren sind insbesondere Natriumlaurylsufat, alkoxylierte und gegebenenfalls sulfonierte Alkylphenole mit meist 8 bis 10 C-Atomen im Alkylrest und vorzugsweise 10 bis 30 Ethylenoxydresten, sowie 10 bis 20 C-Atome enthaltende Alkylsulfonate.

Als Polymerisationsinitiatoren werden wasserlösliche radikalbildende Sotffe, wie besonders Ammonium- und Alkalipersulfate und Wasserstoffperoxid vorgezogen.

Als Monomeres (b) wird Styrol oder Gemische von Styrol mit bis zur gleichen Menge Acrylnitril vorgezogen, doch kann als Monomeres (b) auch Acrylnitril ohne Zusatz von Styrol eingesetzt werden. Bei dem neuen Verfahren werden die Abietinsäure enthaltenden Naturharze und/oder deren Ester, vorzugsweise in den Monomeren (b) gelöst. Ein Lösen dieser Harze in Butadien ist in manchen Fällen, z. B. beim Einsatz von speziellen Naturharzestern, wie Glycerinester, und wenn diese in nur verhältnismäßig geringer Menge, z. B. in Mengen von 2 bis 10 Gew.-%, bezogen auf das Butadien, eingesetzt werden möglich. Als Monomere (c) kommen vor allem Acrylsäure und Itaconsäure, sowie ferner Methacrylsäure, Maleinsäure und Fumarsäure in Frage. Auch Monoester von Dicarbonsäuren dieser Art, wie Maleinsäuremonomethylester und Maleinsäure-mono-n-butylester, sind geeignet.

Bei der praktischen Durchführung des neuen Polymerisations-Verfahrens wird meist nach der Methode des « Emulsions-Zulaufverfahrens » gearbeitet, bei der man in einem Teil der wäßrigen Phase gegebenenfalls mitverwendete wasserlösliche Monomere ganz oder zum Teil, sowie einen Teil der Emulgatoren und Polymerisationsinitiatoren vorlegt, einen Teil der Monomeren zugibt, die Polymerisation durch Erwärmen auf Temperaturen von meist 40 bis 80 °C startet und dann Emulsionen der restlichen Monomeren, die die Naturharze enthalten, nach Maßgabe der Polymerisation zuführt. Anschließend läßt man noch auspolymerisieren und entfernt, soweit erforderlich, überschüssige Monomere, z. B. unter Durchleiten von Wasserdampf oder Stickstoff, meist bei erhöhter Temperatur. Der pH-Wert liegt bei dem Verfahren im üblichen Bereich, meist zwischen 1 und 6, vorzugsweise zwischen 2 und 3.

Die Polymerisation läuft bei dem erfindungsgemäßen Verfahren meist besonders weit, so daß eine Rückgewinnung für Butadien nicht erforderlich ist. Dies ist überraschend, da bei Ersatz des Butadiens durch Acrylester, z. B. n-Butyl-acrylat oder 2-Ethylhexylacrylat praktisch keine Polymerisation eintritt.

Die nach dem neuen Polymerisationsverfahren hergestellten Butadien-Copolymerisat-Dispersionen, die Abietinsäure enthaltende Naturharze enthalten eignen sich mit besonderem Vorteil zur Herstellung von Haftklebebeschichtungen auf den üblichen Substraten, z. B. Folien und Papieren, wobei die üblichen Techniken, wie das Arbeiten mit Rakel, Reverse-Roll Coater, Rollrakel oder Luftbürste, angewandt werden können. In manchen Fällen können sie auch bei der Herstellung von Dichtungsmassen, als Bindemittel für z. B. Fasern, Beschichtungsmittel für Papier und Fasern mitverwendet werden. Sie können mit den meisten in üblicher Weise erhaltenen wüßrigen Dispersionen z. B. auf Basis von Acrylestercopolymerisaten sowie mit den in üblicher Weise hergestellten Butadien-Copolymerisat-Dispersionen in weiten Mengenbereichen gemisch und auch als solche Gemische für die Herstellung von Haftklebe-Beschichtungen eingesetzt werden.

Zur Beurteilung der Klebeeigenschaften von flächigen Gebilden, die unter Verwendung der neuen Haftkleber beschichtet sind, werden in den folgenden Beispielen Polyester-Folien derart mit Haftkleber beschichtet, daß der der Überzug eine Dicke von 30 µm (entsprechend einem Auftrag von 30 g/m$^2$) aufweist. Von den beschichteten Folien werden jeweils 2 cm breite Prüfstreifen verwendet und diese Streifen im Klimaraum bei 20 °C und 65 % relativer Luftfeuchtigkeit 24 Stunden gelagert. Zur Bestimmung der Schälfestigkeit wird der Schältest, zur Bestimmund der Scherfestigkeit der Schertest und zur Bestimmund des Tacks der Probe-Tack-Test wie folgt durchgeführt :

Beim Schältest werden die Prüfstreifen auf eine verchromte Platte aufgeklebt und parallel zur Klebeschicht, d. h. unter einem Winkel von 180 °C abgeschält und die dafür notwendige Kraft gemessen. Die Abzugsgeschwindigkeit beträgt 300 mm/Minute, und die Messung wird 24 Stunden nach der Verklebung durchgeführt.

Als Maß für die Kohäsion der Klebstoffschicht wird der Schertest derart durchgeführt, daß die Prüfstreifen auf ein hochglanzverchromtes Blech mit einer Fläche von 20 × 25 cm aufgepreßt werden. Das Blech wird senkrecht eingespannt und das Ende des Klebestreifens mit 1 000 g belastet. Es wird dann die Zeit bestimmt, bis sich die Verklebung unter der konstanten Zugspannung von 1 000 g löst. Die Messung wird bei 20 °C und bei 50 °C ausgeführt.

Die Bestimmung des Tacks erfolgt auf einem Polyken-Probe-Tack-Tester, wie er in der Special Technical Publication Nr. 360 der ASTM (1963) aufgeführt ist, wobei die Kontaktzeit 0,2 Sekunden, die Abzugsgeschwindigkeit 2 cm/Sekunde und das Gewicht 20 g/cm$^2$ beträgt.

Die in den folgenden Beispielen und Vergleichsversuche angegebenen Teile und Prozente beziehen sich auf das Gewicht. Die Restmonomeren der Beispiele 1 bis 4 und der Vergleichsversuche A und B wurden durch Erhitzen am Rotationsverdampfer (2 Stunden bei 75 °C) entfernt.

Beispiel 1

Vorlage :
2,0 Teile Wasser
0,02 Teile Natriumpersulfat
0,01 Teil Natriumsalz der Ethylendiamintetraessigsäure

Zulauf I :
6,6 Teile Wasser
6,0 Teile Butadien
3,8 Teile Styrol in dem 1 Teil Balsamharz WWX (Herkunftsland : China, Firma H. Ter Hell & Co., Hamburg) gelöst ist
0,2 Teile Acrylsäure
0,06 Teile tert-Dodecylmercaptan
1 Teil eines handelsüblichen Anlagerungsprodukts von 25 Mol Äthylenoxid an p-Iso-nonylphenol als 20 %ige wäßrige Lösung
0,29 Teile einer 35 %igen wäßrigen handelsüblichen Lösung des Natriumsalzes eines sulfonierten Anlagerungsproduktes von 25 Mol Äthylenoxid an p-Isooxylphenol.

Zulauf II :
1 Teil Wasser
0,04 Teile Natriumpersulfat

Die Vorlage wird mit 6 Teilen des Zulauf I gemischt und das Gemisch in einem Polymerisationskessel auf 75 °C erwärmt und 15 Minuten anpolymerisieren lassen. Man läßt dann gleichzeitig aus verschiedenen Gefäßen bei 75 °C die Zuläufe I und II innerhalb von 1 1/2 Stunden zulaufen.

Nach 15 Stunden Nachpolymerisation bei 75 °C wird ein Umsatz von 95 % erreicht.

Beispiel 2

Es wurde nach den Angaben von Beispiel 1 gearbeitet, jedoch anstelle des Balsamharzes WWX 2 % Balsamharz WW eingesetzt. Nach 12 Stunden Nachpolymerisation wird ein Umsatz von 95 % erreicht.

Beispiel 3

Es wird nach den Angaben von Beispiel 2, jedoch unter Zusatz von 15 % Balsamharz WW gearbeitet. Nach 15 Stunden Nachpolymerisation wird ein Umsatz von 90 % erreicht.

Beispiel 4

Es wird nach den Angaben von Beispiel 1 gearbeitet, jedoch anstelle des Balsamharzes WW 10 % eines handelsüblichen Glycerinesters von hydriertem Kolophonium (Hercules NV, Den Haag, Staybelite Ester 10) zugesetzt. Nach 14 Stunden Nachpolymerisation wird ein Umsatz von 95 % erreicht.

Vergleichsversuche

Vergleichsversuch A

Es wurde nach der Rezeptur von Beispiel 1 aber ohne Zusatz von Balsamharz gearbeitet. Ohne Nachpolymerisation wurde ein Umsatz von 60 % erreicht.

Vergleichsversuch B

Zum Vergleich wurde nach den Angaben von Beispiel 1, jedoch ohne Zusatz von Balsamharz gearbeitet. Nach 11 Stunden Nachpolymerisation wurde ein Umsatz von 95 % erreicht.

Vergleichsversuch C

Der Dispersion aus Versuch B wurden 10 Gew.-%, bezogen auf die Menge des Copolymerisates, einer wäßrigen 40 %igen Dispersion des im Beispiel genannten Balsamharzes WWX zugesetzt.

Vergleichsversuch D

Der Dispersion aus Versuch B wurden 10 % des im Beispiel genannten Balsamharzes WWX (fest auf fest) in Form einer 70 %igen Lösung in Toluol zugefügt und aus dem Gemisch aus Toluol über einer Temperatur von 70 °C innerhalb von 2 Stunden am Rotationsverdampfer abgedampft.

Die mit den Dispersionen der Beispiele und der Vergleichsversuche erhaltenen Klebewerte sind in der folgenden Tabelle zusammengestellt :

Tabelle

| Beispiel bzw. Vergleichsversuch Nr. | | 1 | 2 | 3 | 4 | A | B | C | D |
|---|---|---|---|---|---|---|---|---|---|
| Schälfestigkeit (N/cm) | | 11 A | 2,3 A | 17 K | 11,4 A | 0,2 A | 0,3 A | 7,1 A | 9,2 A |
| Scherfestigkeit (St.) | 23 °C | > 24 | > 24 | 7 | > 24 | 0,5 A | 0,5 A | > 24 | > 24 |
| | 50 °C | 10 K | 20 K | 1,5 K | 22 K | 0,3 A | 0,2 A | 8 K | 6 K |
| Probe Track ($N/cm^2$) | | 7,3 | 3,7 | 8,7 | 7,6 | 2,1 | 1,9 | 3,2 | 4,5 |

(A : Adhäsionsbruch)
(K : Kohäsionsbruch)

## Ansprüche

Verfahren zur Herstellung von wäßrigen Dispersionen von Butadien-Copolymerisaten durch Polymerisation von

a) 40 bis 75 Gew.-% Butadien,
b) 60 bis 25 Gew.-% Styrol und/oder Acrylnitril und
c) 0 bis 5 Gew.-%, bezogen auf die gesamten Monomeren α,β-monoolefinisch ungesättigten, 3 bis 5 C-Atome enthaltenden Mono- und/oder Dicarbonsäuren

in wäßriger Emulsion in Gegenwart von üblichen Emulgatoren und Polymerisationsinitiatoren bei Temperaturen, die für die Emulsionscopolymerisation von Butadien üblich sind, dadurch gekennzeichnet, daß man in Gegenwart von 2 bis 15 Gew.-%, bezogen auf die Monomeren, Abietinsäure enthaltenden gegebenenfalls veresterten und/oder hydrierten Naturharzen polymerisiert, die dem Polymerisationsgemisch als Lösung in den Monomeren zugegeben werden.

## Claims

A process for the production of aqueous dispersions of butadiene copolymers by polymerization of

a) 40 to 75 % by weight of butadiene,
b) 60 to 25 % by weight of styrene and/or acrylonitrile, and
c) 0 to 5 % by weight, based on all the monomers, of α,β-monoolefinically unsaturated monocarboxylic and/or dicarboxylic acids containing 3 to 5 carbon atoms

in aqueous emulsion in the presence of conventional emulsifiers and polymerization initiators at temperatures which are usual for the emulsion copolymerization of butadiene, wherein the polymerization is carried out in the presence of from 2 to 15 % by weight, based on the monomers, of optionally esterified and/or hydrogenated natural resins which contain abietic acid and are added to the polymerization mixture as a solution in the monomers.

## Revendications

Procédé de préparation de dispersions aqueuses de copolymérisats de butadiène par polymérisation de

a) 40 à 75 % en poids de butadiène
b) 60 à 25 % en poids de styrène et/ou acrylonitrile et
c) 0 à 5 % en poids, rapporté à l'ensemble des monomères, d'acides mono et/ou dicarboxyliques, à insaturation α,β-monooléfinique, contenant 3 à 5 atomes C

en émulsion aqueuse, en présence d'émulsifiants et initiateurs de polymérisation usuels, à des températures habituelles pour la copolymérisation en émulsion de butadiènes, caractérisé par le fait que l'on polymérise en présence de 2 à 15 % en poids, rapporté au monomères, de résines naturelles, éventuellement estérifiées et/ou hydrogénées, contenant de l'acide abiétique et qui sont ajoutées au mélange de polymérisation comme solvant dans les monomères.